# EUROPÄISCHE PATENTSCHRIFT

(11) **EP 3 474 683 B1**
(45) Veröffentlichungstag und Bekanntmachung des Hinweises auf die Patenterteilung: **30.12.2020**
(21) Anmeldenummer: 17735388.5
(22) Anmeldetag: 14.06.2017
(51) Int. Cl.: A23L 3/46, A23C 1/04, B01D 1/20, F28F 13/12, A23L 3/22, F28F 9/02, F28D 7/16, A23P 10/40, F28D 11/00, F28D 21/00, F26B 21/06, B01D 1/00, B01D 1/04, B01D 1/18, F26B 3/12

(54) **VERFAHREN ZUM ERHITZEN EINES KONZENTRATS IN EINER ANLAGE ZUM ZERSTÄUBUNGSTROCKNEN UND ANLAGE ZUR DURCHFÜHRUNG DES VERFAHRENS**
PROCESS FOR HEATING A CONCENTRATE IN A SPRAY-DRYING SYSTEM AND SYSTEM FOR IMPLEMENTATION OF THE PROCESS
PROCEDE DE CHAUFFAGE D'UN CONCENTRE DANS UN SYSTEME DE SECHAGE PAR ATOMISATION ET SYSTEME POUR L'EXECUTION DU PROCEDE

(30) Priorität: 23.06.2016 DE 102016007636
(43) Veröffentlichungstag der Anmeldung: 01.05.2019
(73) Patentinhaber: GEA TDS GmbH, 31157 Sarstedt (DE)
(72) Erfinder: SCHWENZOW, Uwe, 48683 Ahaus (DE); ROLLE, Ulrich, 48351 Everswinkel (DE); ASSING, Hubert, 48683 Ahaus (DE); TACKE, Ludger, 46342 Velen (DE); SCHMIED, Andreas, 48249 Dülmen (DE)
(74) Vertreter: Hauck Patentanwaltspartnerschaft mbB
(86) Internationale Anmeldenummer: PCT/EP2017/000695
(87) Internationale Veröffentlichungsnummer: WO 2017/220192

(56) Entgegenhaltungen:
- EP-A1- 0 458 310
- EP-A2- 0 437 888
- WO-A1-2008/077399
- WO-A1-2012/040502
- DE-A1-102013 010 460
- DE-B3-102014 012 279
- GB-A- 801 740
- GB-A- 2 132 495

## Beschreibung

### TECHNISCHES GEBIET

Die Erfindung betrifft ein Verfahren zur Erhitzung eines Konzentrats in einer Anlage zum Zerstäubungstrocknen, insbesondere für temperatursensible Konzentrate, nach dem Oberbegriff des Anspruchs 1 sowie eine Anlage, welche zur Durchführung des Verfahrens nach Anspruch 1 geeignet ist. Die Erfindung betrifft weiterhin ein Verfahren zur Steuerung des Erhitzens eines Konzentrats in einer Anlage zum Zerstäubungstrocknen, wobei das Konzentrat durch zusätzliches Hochdruck-Erhitzen nach Anspruch 1 behandelt wird. Unter temperatursensiblen Konzentraten sollen insbesondere solche Substrate verstanden werden, die einen hohen Gehalt an Proteinen und Trockenstoffen und wenig Wasser aufweisen, die leicht denaturieren und die im Verlauf des Zerstäubungstrocknens unter aseptischen Bedingungen zu einem keimfreie Endprodukt verarbeitet werden.

### STAND DER TECHNIK

Die Herstellung pulverförmiger Nahrungsmittelprodukte, insbesondere Milchprodukte, wie beispielsweise leicht lösliche Nahrungsmittel für Kleinkinder, erfolgt in vielen Fällen durch Zerstäubungs- oder Sprühtrocknung in einem sogenannten Trocknerturm. Dort wird ein zuvor auf einen bestimmten Gehalt an Trockensubstanz in einem Verdampfer bzw. einem Eindampfer aufkonzentriertes und anschließend in einem Erhitzer auf eine definierte Temperatur angewärmtes Produkt, nachfolgend als Konzentrat bezeichnet, in einen heißen Luftstrom entweder über Scheiben oder, wie im vorliegenden bevorzugten Fall, über Düsen, insbesondere Einstoffdüsen, zerstäubt. Diesen sog. Druckzerstäuber-Düsen wird das aus dem Erhitzer austretende Konzentrat mittels einer Hochdruck-Kolbenpumpe, einer sogenannten Düsenpumpe, mit einem Druck, der bis maximal 350 bar reichen kann, zugeführt.

Die Statik der Trocknertürme ist in der Regel nicht ausreichend, um die schwere Hochdruck-Kolbenpumpe zu tragen und um sie so in der unmittelbaren Nähe zu den Druckzerstäuber-Düsen, was aus technologischen und verfahrenstechnischen Gründen wünschenswert wäre, zu installieren. Eine in der Nähe der Druckzerstäuber-Düsen angeordnete Hochdruck-Kolbenpumpe würde in diesem Bereich, dem sogenannten Heißraum im Kopfraum des Trocknerturms, bei Umgebungstemperaturen arbeiten, die 75 bis 80 °C erreichen können und eine aseptische Betriebsweise erfordern. Eine weitere thermische Inaktivierung von Mikroorganismen wäre darüber hinaus nicht möglich.

Aus den vorgenannten Gründen wird die Hochdruck-Kolbenpumpe bislang im unteren Bereich des Trocknerturms angeordnet. Ein signifikanter Höhenunterschied zwischen der Hochdruck-Kolbenpumpe und den Druckzerstäuber-Düsen wird über eine Steigleitung überbrückt, die planmäßig oder zwangsläufig auch als Heißhaltestrecke fungiert.

Um eine möglichst lange und hygienisch einwandfreie Lagerung des pulverförmigen Nahrungsmittelproduktes sicherzustellen, muss das Endprodukt eine gute Löslichkeit aufweisen und möglichst keimfrei sein. Die erforderliche Keimfreiheit ergibt sich durch das Abtöten von Mikroorganismen weitestgehend für das aus dem Erhitzer austretende Konzentrat, wenn dieses mit einem geeigneten Temperatur- und Haltezeitverlauf geführt und wenn in die Betrachtung die als Heißhaltestrecke fungierende Steigleitung zu den Druckzerstäuber-Düsen einbezogen wird. Für die Herstellung von sogenanntem "low heat pulver" ist eine Temperatur von max. 77 °C, von sogenanntem "high heat pulver" von ca. 85 °C und von sogenanntem "ultra high heat pulver" von bis zu 125 °C erforderlich.

Die zwangsläufige mittlere Verweilzeit des Konzentrats in der Steigleitung nach vorheriger Hochdruckbehandlung in Verbindung mit einer heißen Temperatur beeinflusst die Löslichkeit des Endprodukts in unerwünschter Weise. Darüber hinaus führt die lange Heißhaltung in der Steigleitung zu einer Denaturierung des Konzentrats. So beträgt beispielsweise die mittlere Verweilzeit des Konzentrats 42 Sekunden, wenn es in einer 30 m langen Steigleitung mit einem Durchmesser DN50 und mit einem Volumenstrom von 5.000 Liter/h gefördert wird. Dies bedeutet in der Regel auch Qualitätsminderung des Endprodukts. Eine diesbezügliche Denaturierung kann beispielsweise die Pulverqualität von Babyfood derart beeinflussen, dass dessen vollständige Löslichkeit nicht mehr sichergestellt ist und dadurch eine nicht hinnehmbare Klümpchenbildung in der zubereiteten Babynahrung auftritt. Darüber hinaus führt die lange Verweilzeit bei hohen Temperaturen zu chemischen Reaktionen im Konzentrat und zur Ansatzbildung, dem sog. Produkt-Fouling, an den Wänden der Steigleitung und in den Druckzerstäuber-Düsen, wodurch sich die Produktionszeit für eine vorgelegte Charge Konzentrat unerwünscht verlängert.

So darf beispielsweise bei Milchkonzentraten zur Vermeidung von Kristallisationsvorgängen in der Lactose die Temperatur in der Steigleitung und damit bis zu den Druckzerstäuber-Düsen nicht höher als 65 bis 68 °C sein. Daher begrenzt die lange Steigleitung die zulässige dortige Temperatur.

Eine Verbesserung des mikrobakteriellen Status des Konzentrats vor dem Eindampfer, beispielsweise durch Entkeimung mittels Mikrofiltration, ist bekannt, sie ist aufwändig, aber verbessert den mikrobakteriellen Status des Endprodukts.

Die notwendige Keimfreiheit bis zum Eintritt in die Drückzerstäuber-Düsen kann auch durch die Hochdruck-Kolbenpumpe gefährdet werden, da diese das Konzentrat mit vertretbarem technischem Aufwand nicht unter aseptischen Bedingungen fördern kann. Aseptische Förderbedingungen erfordern hingegen einen erheblichen technischen Aufwand, der in der Praxis in der Regel nicht betrieben wird oder betrieben werden kann. Über die Kolben der Hochdruck-Kolbenpumpe können Keime aus der Umgebungsluft in das Konzentrat eingetragen werden, sodass dort eine Reinfektion stattfindet. Das pulverförmige Endprodukt kann dann verkeimt sein und die Verkeimung wird unter der Einwirkung der im Endprodukt notorisch verbleibenden Restfeuchte zeitabhängig zunehmen.

Eine aseptische Förderung des aus dem Erhitzer austretenden flüssigen Ausgangsprodukts ist nach dem Stand der Technik in der stromabwärts angeordneten Hochdruck-Kolbenpumpe nur mit erhöhtem technischem Aufwand möglich.

Die bekannten Anlagen zum Sprühtrocknen, bei denen ein Niederdruck-Erhitzen und anschließendes Druckerhöhen im Fußbereich des Trocknerturms auf maximal 350 bar und eine Förderung des Konzentrats über eine Steigleitung bis zu den Druckzerstäuber-Düsen erfolgt, weisen folgende Nachteile auf:
- die Steigleitung wirkt wie eine technologisch an sich unerwünschte Verweilzeitstrecke und ein Heißhalter;
- die Verweilzeit verringert zwangsläufig die Eintrittstemperatur in die Druckzerstäuber-Düsen;
- durch die Verweilzeit ergibt sich ein unerwünschter Viskositätsanstieg (Geliereffekt);
- der Zustand des temperatursensiblen Konzentrats ist vor den Druckzerstäuber-Düsen nicht klar definiert, weil die Verweilzeit in der Steigleitung nicht klar definiert werden kann;
- durch die Verweilzeit in Verbindung mit der Heißhaltung kommt es zur Denaturierung des Konzentrats, die mit verstärkten Konzentrat-Ablagerungen einhergeht;
- es ergibt sich eine geringere Standzeit der Anlage, die dadurch öfter zu reinigen ist;
- die Hochdruck-Kolbenpumpe müsste steril arbeiten, d.h. das Konzentrat muss durch die Pumpe aseptisch behandelt werden, was mit hohen Kosten verbunden ist;
- Hochdruck-Kolbenpumpen, die nicht aseptisch arbeiten, führen zu einem stark verkeimten Endprodukt;
- durch die relativ niedrige Temperatur vor den Druckzerstäuber-Düsen ergibt sich eine reduzierte Mengenleistung des Trocknerturms.

Zum Erreichen der notwendigen Sterilität des unter hohem Druck aus der Hochdruck-Kolbenpumpe austretenden flüssigen Konzentrats könnte ein geeignetes Hochdruck-Erhitzen dieses Konzentrats auf dem Weg zu den Druckzerstäuber-Düsen vorgesehen werden. Dieses Hochdruck-Erhitzen könnte unmittelbar vor den Druckzerstäuber-Düsen erfolgen, wodurch die Temperatur in der Steigleitung auf eine unkritische Höhe reduziert werden könnte. Diese Anordnung würde auch weiterhin den Betrieb einer nicht aseptisch fördernden Hochdruck-Kolbenpumpe am Fuße des Trocknerturms erlauben. In diesem Zusammenhang wurde bereits vorgeschlagen, das Hochdruck-Erhitzen in einem hinreichend druckfesten, gewendelten Monorohr vorzunehmen, das zur Beheizung von außen mit Dampf beaufschlagt wird. Dieser Vorschlag ist jedoch nicht zielführend, da kein gleichmäßiger Wärmeeintrag über die Außenseite und über die gesamte Länge des Monorohres und damit keine gleiche Verweilzeit für alle Teilchen des im Monorohr strömenden Konzentrats sichergestellt ist.

Ein Wärmeaustauscher in Gestalt eines Monorohres ist auch aus der US 3,072,486 A bekannt. Diese Druckschrift beschreibt die Zubereitung von löslichem Milchpulver in einer Anlage zur Zerstäubungstrocknung. Ein Konzentrat aus Magermilch oder Vollmilch wird in einer Heizeinrichtung auf eine Temperatur zwischen ca. 40 °C und 49 °C vorgewärmt, anschließend mittels einer Verdrängerpumpe einem Mischer zugeführt und dort unter Zufuhr eines Gases in einen stabilen Schaum aufgeschäumt. Der Schaum wird über eine Rohrleitung aus dem Mischer abgeführt, einer Hochdruckpumpe zugeführt, erfährt dort eine Druckerhöhung auf beispielsweise ca. 103 bar und tritt an einem Sprühkopf, der über die Rohrleitung mit der Hochdruckpumpe verbunden ist, in einen Sprühtrockner aus. Ein in den Sprühkopf einmündender Endabschnitt der Rohrleitung ist von einem Rohr größeren Durchmessers umgeben, das in einem Ofen auf eine Temperatur von ca. 232 °C erhitztes Gas dem Sprühkopf mit einer Temperatur zwischen ca. 82 °C und 84 °C zuführt. Der Endabschnitt der den Schaum transportierenden Rohrleitung stellt somit ein von außen mit einem Gas beheiztes Monorohr dar.

Ein Wärmeaustauscher, der die Forderungen nach einem hinreichend gleichmäßigen Wärmeeintrag und nach einer für alle Teilchen des Konzentrats annähernd gleichen Verweilzeit auf niedrigem Druckniveau erfüllt, wäre grundsätzlich ein sogenannter Rohrbündel-Wärmeaustauscher, der prinzipiell an die Stelle des vorgenannten Monorohres treten könnte. Die grundsätzliche Bauweise eines diesbezüglichen Rohrbündel-Wärmeaustauschers ist beispielsweise in der DE 94 03 913 U1 beschrieben. Die DE 10 2005 059 463 A1 offenbart ebenfalls einen derartigen Rohrbündel-Wärmeaustauscher für ein niedriges Druckniveau und zeigt darüber hinaus auf, wie eine Anzahl von Rohrbündeln in diesem Wärmeaustauscher parallel angeordnet und fluiddurchgängig mittels Verbindungsbogen oder Verbindungsarmaturen in Reihe geschaltet werden können. Eine diesbezügliche Anordnung zeigt **Figur 1** dieses Dokuments (Stand der Technik). Ein weiterer Rohrbündel-Wärmeaustauscher ist in der DE 10 2013 010 460 A1 beschrieben.

Obgleich zwischenzeitlich ein Krümmer bzw. eine Verbindungsarmatur für Produktdrücke bis 350 bar zur Verbindung der Rohrbündel in einem diesbezüglichen Rohrbündel-Wärmeaustauscher zur Verfügung steht **(**DE 10 2014 012 279 A1**),** wobei der bekannte Rohrbündel-Wärmeaustauscher (DE 94 03 913 U1**;** DE 10 2005 059 463 A1) für dieses hohe Druckniveau nicht geeignet ist, ist auch das verfahrenstechnische Problem nicht gelöst, das darin besteht, ein Konzentrat für das Zerstäubungstrocknen vor den Druckzerstäuber-Düsen einer Behandlung zu unterziehen, bei der eine Denaturierung des Konzentrats und Produktablagerungen vermieden und ein keimfreies, d.h. mikrobiologisch einwandfreies Endprodukt sichergestellt wird.

Die Aufgabe der vorliegenden Erfindung besteht somit darin, die Nachteile des Standes der Technik zu überwinden und ein Verfahren zum Erhitzen eines Konzentrats in einer Anlage zum Zerstäubungstrocknen der gattungsgemäßen Art und eine Anlage zur Durchführung des Verfahrens bereitzustellen, die bei einer wirtschaftlichen Steigerung der Mengenleistung des Trocknerturms die Neigung zur Denaturierung des Konzentrats und zu Ablagerungen desselben vermindern und dabei ein mikrobiologisch einwandfreies Endprodukt sicherstellen.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des Verfahrens sind Gegenstand der Unteransprüche. Eine Anlage, welche zur Durchführung des Verfahrens nach Anspruch 1 geeignet ist, wird mit den Merkmalen des Anspruchs 8 angegeben. Vorteilhafte Ausgestaltungen der erfindungsgemäßen Anlagen sind Gegenstand der zugeordneten Unteransprüche. Ein Verfahren zur Steuerung des Erhitzens eines Konzentrats in einer Anlage zum Zerstäubungstrocknen, wobei das Konzentrat durch zusätzliches Hochdruck-Erhitzen nach Anspruch 1 behandelt wird, ist Gegenstand des Anspruchs 7.

Das erfindungsgemäße Verfahren geht aus von dem bekannten Verfahren,
- bei dem auf einem Niederdruck-Niveau ein Niederdruck-Erhitzen des Konzentrats von einer Vorlauf-Temperatur auf eine für ein Druckzerstäuben des Konzentrats erforderliche Zulauf-Temperatur, die auch die Zerstäubungs-Temperatur darstellt, durchgeführt wird und
- bei dem anschließend ein Druckerhöhen des Konzentrats auf ein Hochdruck-Niveau erfolgt, das bis an maximal 350 bar heranreichen kann.

Das Verfahren eignet sich insbesondere für die Nachrüstung einer bestehenden Anlage, in der eine aseptisch arbeitende oder auch nicht aseptisch arbeitende Hochdruck-Kolbenpumpe angeordnet ist, und es ist durch die Abfolge der folgenden Schritte (a) bis (c) gekennzeichnet:
(a) zusätzliches Hochdruck-Erhitzen (H2) des Konzentrats (K) auf dem Hochdruck-Niveau (p2) auf eine erhöhte Zerstäubungs-Temperatur (T3), die im Bereich von 75 bis 80 °C liegt, mittels eines Hochdruck-Wärmeaustauschers (16), der sekundärseitig mit einem Wärmeträgermittel (W) beaufschlagt und der als Rohrbündel-Wärmeaustauscher mit einer Vielzahl von vom Konzentrat (K) parallel durchströmten Innenrohren ausgebildet ist, die kreisringförmig und auf einem einzigen Kreis angeordnet sind und in Summe einen Innenkanal ausbilden, der, in Strömungsrichtung gesehen, im Anschluss an die Innenrohre in Form eines umlaufenden Ringraumes ausgeführt ist,
(b) definiertes Scherbeanspruchen (S) des Konzentrats (K) im Verlauf oder im unmittelbaren Nachgang zur Behandlung nach Schritt (a) mit Mitteln, die in einem ringraumförmigen austrittsseitigen Kanal bestehen, der einerseits mit dem Ausgang des umlaufenden Ringraumes und andererseits mit einem zweiten Hochdruck-Leitungsabschnitt verbunden ist und der eine definierte Erstreckungslänge und einen definierten längenabhängigen Verlauf seiner Kanaldurchtrittsquerschnitte aufweist und
(c) anschließend unverzügliches Überführen (Ü) des nach Schritt (b) behandelten Konzentrats (K) an den Ort seines Druckzerstäubens (DZ), wobei eine Überführungszeit (Δt) für das unverzügliche Überführen (Ü) durch einen minimal möglichen strömungstechnisch wirksamen Abstand zwischen den Mitteln zur Durchführung des Schrittes (b) und dem Ort des Druckzerstäubens (DZ) bestimmt ist.

Beim Verfahren erfolgt das Erhitzen des Konzentrats auf die erhöhte Zerstäubungs-Temperatur in zwei Schritten, und zwar mit einem Druckerhöhen von einem Niederdruck-Niveau auf ein Hochdruck-Niveau zwischen den beiden Schritten.

Im Verfahren besteht ein wesentlicher erfinderischer Grundgedanke darin, dass das Konzentrat im Verlauf des zusätzlichen Hochdruck-Erhitzens oder im unmittelbaren Nachgang zum zusätzlichen Hochdruck-Erhitzen auf die erhöhte Zerstäubungs-Temperatur einer definierten Scherbeanspruchung unterzogen wird. Unter definierter Scherbeanspruchung soll eine strömungsmechanische Beanspruchung des Konzentrats verstanden werden, die Scherkräfte auf das Konzentrat ausübt. Diese Scherkräfte sind durch eine definierte Erstreckungslänge und einen definierten längenabhängigen Verlauf eines ringraumförmigen austrittsseitigen Kanals, den das Konzentrat durchströmen muss, bestimmt und können durch die geometrische Ausgestaltung diese Kanals den jeweiligen Erfordernissen des Konzentrats (Rezeptur) angepasst werden.

Danach erfolgt ein unverzügliches Überführen des Konzentrats an den Ort seines Druckzerstäubens. Die Überführungszeit für dieses unverzügliche Überführen wird so kurz, wie dies möglich ist, eingerichtet. So kurz, wie möglich, bedeutet konkret, dass die Mittel zum zusätzlichen Hochdruck-Erhitzen, die die Mittel zur Scherbeanspruchung einschließen, einen minimal möglichen strömungstechnisch wirksamen Abstand zum Ort des Druckzerstäubens, den Druckzerstäuber-Düsen, erhalten. Vorzugsweise münden die Mittel zur Scherbeanspruchung unmittelbar in die Druckzerstäuber-Düsen ein. Unter einem strömungstechnisch wirksamen Abstand ist in diesem Zusammenhang der tatsächlich vom Konzentrat zurückgelegte Strömungsweg zu verstehen.

Mit dem erfindungsgemäßen zusätzlichen Hochdruck-Erhitzen wird die bislang im Stand der Technik hinzunehmende nachteilige Heißhaltung quasi gekappt und es gelingt, unmittelbar vor den Druckzerstäuber-Düsen, die Erhitzung zu definieren bzw. die Wärmebehandlung reproduzierbar einzurichten. Es können gewünschte Wärmebelastungen, abhängig und angepasst an das Konzentrat, den Massenstrom und die Inhaltsstoffe, definiert eingestellt werden. Darüber hinaus ist auch eine kontrollierte Denaturierung des Konzentrats mit Blick auf das gewünschte Endprodukt möglich, indem Temperatur und Verweilzeit beim zusätzlichen Hochdruck-Erhitzen eingestellt werden. Dadurch wird beispielsweise eine effektive mikrobiologische Verbesserung des Endproduktes oder eine definierte Eiweiß- oder Stärkequellung erreicht.

Durch die geringere Temperatur in der Steigleitung und die geringere Verweilzeit bei hoher Temperatur im Zuge des zusätzlichen Hochdruck-Erhitzens ist der Viskositätsanstieg im Konzentrat, der sog. Geliereffekt, bedingt durch Kristallisationsvorgänge und/oder produktspezifische Eigenschaften, geringer als bei bekannten Verfahren. Dieser Geliereffekt wird durch die definierte Scherbeanspruchung einerseits tendenziell reduziert und andererseits wird der Geliereffekt standardisiert, wodurch die Druckzerstäuber-Düsen erst viel später durch Ansatzbildung verkleben. Damit werden Reinigungs- und Rüstzeiten reduziert.

Ein weiterer Vorteil durch die erfindungsgemäßen Maßnahmen besteht darin, dass das Konzentrat mit einer höheren Trockenstoff-Konzentration zugeführt werden kann. Eine Trockenstoffanhebung ist in Abhängigkeit von den Eigenschaften des Konzentrats von 55 auf maximal 65 Mengenprozent möglich. Unter Mengenprozent des Konzentrats soll das Verhältnis in Prozent, gebildet aus der Masse des Konzentrats, die in einer Masse Flüssigkeit enthalten ist, verstanden werden. Die Leistung der Druckzerstäubungs-Anlage bzw. der Trocknungsanlage steigt bekanntermaßen mit einer höheren Trockenstoff-Konzentration und höherer Zerstäubungs-Temperatur an den Druckzerstäuber-Düsen, wobei die Zerstäubungs-Temperatur gegenüber bekannten Verfahren bei gleicher Pulverqualität um 1 bis max. 5 °C erhöht werden kann.
- Eine Erhöhung der Temperatur des an der Druckzerstäuber-Düse austretenden Konzentrats um 1 °C hat eine Effizienzsteigerung, d.h. eine Steigerung der Mengenleistung des Trocknerturms von 2,5 bis 3 % zur $Folge \left(\frac{\left(2,5-3\right) %}{1 ° C}\right) .$
- Das erfindungsgemäße Verfahren senkt somit die erforderliche spezifische Energie zum Trocknen und vorhandene Trocknungskapazitäten können erweitert werden.
- Es besteht die Aussicht, das hier vorgestellte erfindungsgemäße Verfahren auch für eine UHT-Behandlung des Konzentrats bis in den aseptischen Bereich zu verwenden mit dem Ziel der Herstellung von sogenanntem "ultra high heat pulver".

Das definierte Scherbeanspruchen des Konzentrats im Verlauf oder im unmittelbaren Nachgang zum zusätzlichen Hochdruck-Erhitzen wird dergestalt durchgeführt, dass das Konzentrat definierte Durchtrittsquerschnitte mit definierten Erstreckungslängen mit definierten erhöhten Strömungsgeschwindigkeiten durchströmt. Zur Steuerung des definierten Scherbeanspruchens sieht eine Ausgestaltung des Verfahrens vor, dass eine erhöhte Strömungsgeschwindigkeit des Konzentrats beim zusätzlichen Hochdruck-Erhitzen gegenüber dessen Strömungsgeschwindigkeit im dem zusätzlichen Hochdruck-Erhitzen vorgelagerten Behandlungsbereich um 20 bis 25 % erhöht ist. Diesbezüglich wird vorgeschlagen, dass die erhöhte Strömungsgeschwindigkeit maximal 3 m/s beträgt. Da diese Erhöhung der Strömungsgeschwindigkeit auf Hochdruck-Niveau stattfindet, spielen die damit verbundenen zusätzlichen Druckverluste beim Hochdruck-Erhitzungsvorgang keine signifikante Rolle. Die erhöhte Strömungsgeschwindigkeit ergibt einen besseren Wärmeübergang auf der Konzentratseite, woraus folgende weitere Vorteile resultieren:
- es ist ein Wärmeaustausch mit geringerer Wärmeaustauscherfläche möglich;
- es ist ein Eiweißkonzentrat mit höherer Konzentration möglich;
- es sind ein höherer Volumenstrom und damit eine höhere Durchsatzleistung möglich;
- es sind, bedingt durch den besseren Wärmeübergang, eine höhere Erhitzung des Konzentrats und dadurch eine höhere Trocknungsleistung möglich;
- es erfolgt eine definierte, planmäßig gewünschte Denaturierung des Konzentrats.

Das erfindungsgemäße Verfahren sieht vor, dass das Hochdruck-Niveau, auf das das Konzentrat durch Druckerhöhen gebracht wird, bis maximal 350 bar beträgt. Weiterhin sieht eine Ausgestaltung des erfindungsgemäßen Verfahrens vor, dass die erhöhte Zerstäubungs-Temperatur im Bereich von 75 bis 80 °C liegt und hier bevorzugt auf 80 °C eingestellt wird. Das Verfahren sieht weiterhin vor, ein Konzentrat mit einer Trockenstoff-Konzentration bis maximal 65 Mengenprozent (65 m%) zu behandeln.

Die Anlage, welche zur Durchführung des Verfahrens nach Anspruch 1 geeignet ist, die auf einer Anlage nach dem Stand der Technik aufsetzt und diese im Sinne der erfindungsgemäßen Aufgabenstellung weiterentwickelt, besteht in an sich bekannter Weise aus einem Trocknerturm mit Druckzerstäuber-Düsen, einem Vorlaufbehälter, der über einen ersten Leitungsabschnitt einer Niederdruck-Leitung, in dem eine Vorlaufpumpe angeordnet ist, fluidgängig mit dem Eintritt eines Niederdruck-Wärmeaustauschers verbunden ist. Sie besteht weiterhin aus einer Hochdruck-Kolbenpumpe, die eingangsseitig über einen zweiten Leitungsabschnitt der Niederdruck-Leitung mit dem Ausgang des Niederdruck-Wärmeaustauschers und die ausgangsseitig über eine Hochdruck-Leitung mit den Druckzerstäuber-Düsen verbunden ist.

Erfindungsgemäß wird vorgeschlagen, dass die Hochdruck-Leitung über einen zusätzlichen Hochdruck-Wärmeaustauscher geführt ist. Der Hochdruck-Wärmeaustauscher ist als Rohrbündel-Wärmeaustauscher mit einer Vielzahl von vom Konzentrat parallel durchströmten Innenrohren ausgebildet, die kreisringförmig und auf einem einzigen Kreis angeordnet sind und in Summe einen Innenkanal ausbilden. Der Innenkanal ist, in Strömungsrichtung gesehen, im Anschluss an die Innenrohre in Form eines umlaufenden Ringraumes ausgeführt. Dabei verbindet ein erster Hochdruck-Leitungsabschnitt der Hochdruck-Leitung den Ausgang der Hochdruck-Kolbenpumpe mit dem Eingang des zusätzlichen Hochdruck-Wärmeaustauschers, und ein zweiter Hochdruck-Leitungsabschnitt der Hochdruck-Leitung verbindet den Ausgang des zusätzlichen Hochdruck-Wärmeaustauschers mit den Druckzerstäuber-Düsen.

Eine strömungstechnisch wirksame Länge des zweiten Hochdruck-Leitungsabschnitts ist dabei auf ein konstruktiv mögliches Mindestmaß reduziert, d.h. der Ausgang des zusätzlichen Hochdruck-Wärmeaustauschers ist, bezogen auf den Strömungsweg des Konzentrats, so nah, wie dies konstruktiv möglich ist, an die Druckzerstäuber-Düsen herangeführt.

Der zusätzliche Hochdruck-Wärmeaustauscher weist ausgangsseitig Mittel zur definierten Scherbeanspruchung des geförderten Konzentrats auf, wobei diese Mittel ohne bewegliche Elemente und/oder Zufuhr von Fremdenergie rein strömungsmechanisch durch definierte Durchtrittsquerschnitte, definierte Längen der Strömungswege und definierte erhöhte Strömungsgeschwindigkeiten wirksam sind.

Die Mittel zur definierten Scherbeanspruchung des Konzentrats bestehen in einem ringraumförmigen austrittsseitigen Kanal, der einerseits mit dem Ausgang des umlaufenden Ringraumes und andererseits mit dem zweiten Hochdruck-Leitungsabschnitt verbunden ist. Dabei weist der ringraumförmige austrittsseitige Kanal im allgemeinsten Falle eine definierte Erstreckungslänge und einen definierten, von der Erstreckungslänge abhängigen Verlauf seiner Kanaldurchtrittsquerschnitte auf.

Unter dem Merkmal hinsichtlich der Anordnung einer Vielzahl von parallel durchströmten Innenrohren ist eine Anordnung zu verstehen, die, unabhängig von der Anzahl der Innenrohre, nicht einen gesamten Kreisquerschnitt eines Rohrbündel-Wärmeaustauschers belegt. Vielmehr sind alle Innenrohre auf dem besagten einzigen Kreis angeordnet, der einen inneren Bereich, nicht nur ein begrenztes Zentrum, von Innenrohren unbelegt lässt. Diese Anordnung macht es möglich, dass der Innenkanal, gebildet durch die kreisringförmig und auf einem einzigen Kreis angeordneten Innenrohre, in Strömungsrichtung gesehen, im Anschluss an die Innenrohre in Form eines umlaufenden Ringraumes ausgeführt werden kann.

Dabei ist es im Sinne einer gleichen Verweilzeit für alle Teile des wärmebehandelten Konzentrats von Vorteil, wie dies auch vorgeschlagen wird, dass die Kanaldurchtrittsquerschnitte über die gesamte Erstreckungslänge konstant sind. Diese wünschenswerte Gleichbehandlung wird weiterhin dadurch befördert, dass die erhöhte Strömungsgeschwindigkeit durch den gesamten Rohrbündel-Wärmeaustauscher bis zum Ende des definierten Scherbeanspruchens des Konzentrats möglichst gleichförmig ist, wobei eine weitere Ausführungsform diesbezüglich vorsieht, dass der Kanaldurchtrittsquerschnitt dem Gesamtdurchtrittsquerschnitt aller parallel durchströmten Innenrohre entspricht.

Das erfindungsgemäße Verfahren und die Anlage zu seiner Durchführung lassen sich in vorteilhafter Weise konzentratabhängig steuern. Hierzu schlägt die Erfindung ein Verfahren zur Steuerung des Erhitzens eines Konzentrats in einer Anlage zum Zerstäubungstrocknen vor, wobei das Konzentrat durch zusätzliches Hochdruck-Erhitzen nach Anspruch 1 behandelt wird. Die Steuerungsparameter für das zusätzliche Hochdruck-Erhitzen sind durch die Eigenschaften des zu erhitzenden Konzentrats und die physikalischen Randbedingungen bestimmt. Unter den Eigenschaften des zu erhitzenden Konzentrats wird dessen Volumenstrom, Viskosität, Druck, Temperatur und Trockenstoff-Konzentration und unter den physikalischen Randbedingungen wird Druck und Temperatur am Ort des Druckzerstäubens verstanden. Die Steuerungsparameter, jeweils bezogen auf das Konzentrat, sind das Hochdruck-Niveau, die erhöhte Zerstäubungs-Temperatur, eine erhöhte Strömungsgeschwindigkeit beim zusätzlichen Hochdruck-Erhitzen und eine Intensität des Scherbeanspruchens.

Die Steuerungsparameter werden mittels einer vor oder bei Inbetriebnahme der Anlage zum Sprühtrocknen erstellten oder hinterlegten Kalibrierfunktion eingestellt. Die Kalibrierfunktion wird gewonnen, indem
- beim An- und Einfahren der Anlage mit einem diskreten Konzentrat (Rezeptur) bis zur Gewinnung einer befriedigenden Produktqualität Steuerungsparameter der in Rede stehenden Art erhalten werden,
- die registriert und in einer Steuerung in Form der "Kalibrierfunktion" (Steuerungsparameter = Funktion von (Konzentrat bzw. Rezeptur)) abgespeichert werden.
Bei einer späteren Behandlung des gleichen Konzentrats (Rezeptur) kann auf diese Erfahrungswerte in Form dieser Kalibrierfunktion zugegriffen und die notwendigen Steuerungsparameter können entsprechend eingestellt werden.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens und in den verschiedensten Ausführungsformen einer Anlage zur Durchführung des Verfahrens realisiert ist, sind in der Zeichnung ein bekanntes Verfahren und, ausgehend von diesem bekannten Verfahren, eine bevorzugte Ausgestaltung des erfinderischen Verfahrens schematisch dargestellt. Ein bevorzugtes Ausführungsbeispiel einer Anlage zur Durchführung des Verfahrens mit einem als Rohrbündel-Wärmeaustauscher ausgebildeten Hochdruck-Wärmeaustauscher ist in der Zeichnung dargestellt und wird nachfolgend beschrieben. Es zeigen
- **Figur 1**: in Form eines vereinfachten Verfahrensschemas ein Verfahren zum Erhitzen eines Konzentrats in einer Anlage zum Zerstäubungstrocknen nach dem Stand der Technik;
- **Figur 1a**: in Form eines vereinfachten Verfahrensschemas ein auf dem bekannten Verfahren gemäß **Figur 1** aufbauendes erfindungsgemäßes Verfahren zum Erhitzen eines Konzentrats in einer Anlage zum Zerstäubungstrocknen;
- **Figur 2**: in schematischer Darstellung eine Anlage nach dem Stand der Technik, welche zur Durchführung des Verfahren nach dem Stand der Technik gemäß **Figur 1** geeignet ist;
- **Figur 3**: in schematischer Darstellung eine Anlage, welche zur Durchführung des erfindungsgemäßen Verfahrens gemäß **Figur 1a** geeignet ist und
- **Figur 4**: im Meridianschnitt einen austrittsseitigen Bereich eines in Form eines Rohrbündel-Wärmeaustauschers ausgebildeten Hochdruck-Wärmeaustauschers.

### DETAILLIERTE BESCHREIBUNG

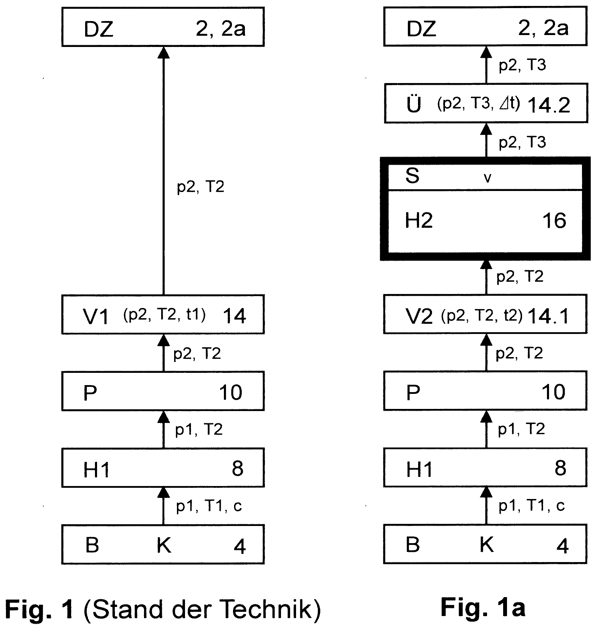

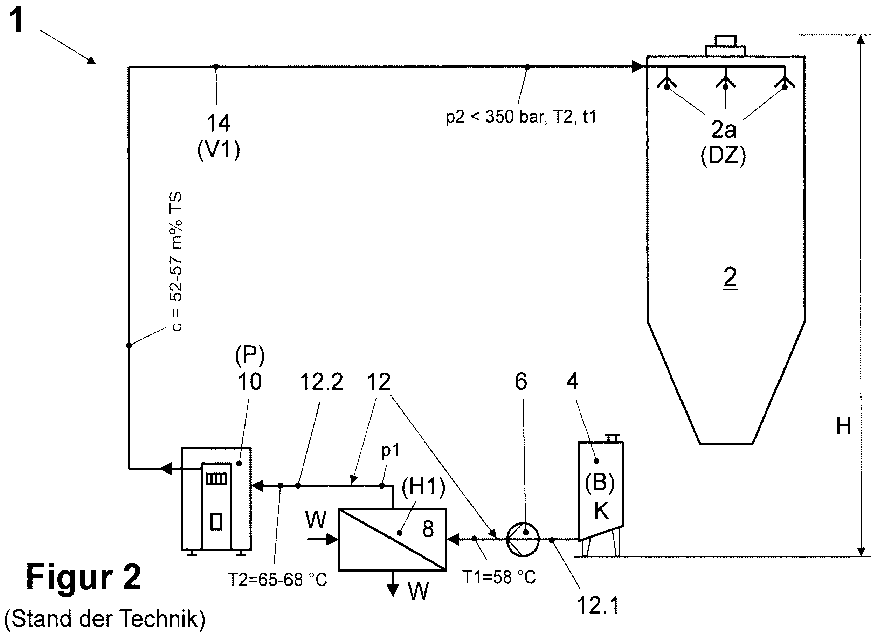

### Stand der Technik (Figuren 1 und 2)

Ein Verfahren zum Erhitzen eines Konzentrats K in einer Anlage zum Sprühtrocknen 1 (Trocknungsanlage) nach dem Stand der Technik zeigt **Figur 1** und eine Anlage 1 nach dem Stand der Technik zur Durchführung des bekannten Verfahrens zeigt **Figur 2****.** Nachfolgend werden das Verfahren und die zugeordnete Anlage 1 anhand dieser beiden Figuren parallel abgehandelt. Die genannten Temperaturen, Drücke und die Trockenstoff-Konzentration sind beispielhaft gewählt und können in der Praxis nach oben oder unten abweichen.

Das in einem Trocknerturm 2 der Tröcknungsanlage 1 durch ein Druckzerstäuben DZ über Druckzerstäuber-Düsen 2a versprühtes Konzentrat K erfährt ein Bevorraten B in einem Vorlaufbehälter 4 (**Figuren 1****,** **2**). Der Vorlaufbehälter 4 ist über einen ersten Leitungsabschnitt 12.1 einer Niederdruck-Leitung 12, in dem eine Vorlaufpumpe 6 angeordnet ist, fluidgängig mit dem primärseitigen Eintritt eines Niederdruck-Wärmeaustauschers 8, in dem ein Niederdruck-Erhitzen H1 des Konzentrats K von einer Vorlauf-Temperatur T1 = 58 °C auf eine Zulauf-Temperatur T2 = 65 bis 68 °C, die auch annähernd noch an den Druckzerstäuber-Düsen 2a vorliegt, durchgeführt wird, verbunden. Der Niederdruck-Wärmeaustauscher 8 ist sekundärseitig mittels eines Wärmeträgermediums W, vorzugsweise Heißwasser, beaufschlagt. Eine Hochdruck-Kolbenpumpe 10 ist eingangsseitig über einen zweiten Leitungsabschnitt 12.2 der Niederdruck-Leitung 12 mit dem primärseitigen Ausgang des Niederdruck-Wärmeaustauschers 8 und ausgangsseitig über eine Hochdruck-Leitung 14 mit den Druckzerstäuber-Düsen 2a verbunden.

In der Hochdruck-Kolbenpumpe 10 erfolgt ein Druckerhöhen P des Konzentrats K von einem eingangsseitig vorliegenden Niederdruck-Niveau p1 auf ein ausgangsseitig erzeugtes Hochdruck-Niveau p2, das bis an p2 = maximal 350 bar heranreichen kann und mit dem abzüglich des Druckabfalls bis zu den Druckzerstäuber-Düsen 2a letztere betrieben werden. Das Konzentrat K weist eine Trockenstoff-Konzentration c auf, die beispielsweise bei 52 bis 57 Massenprozent (m%) Trockenstoff TS liegen kann.

Der Trocknerturm 2 weist bis in seinen Kopfbereich, in dem die Druckzerstäube-Düsen 2a angeordnet sind, eine Turmhöhe H auf. Die Hochdruck-Leitung 14 überwindet im Wesentlichen in Form einer Steigleitung diese Turmhöhe H. Bei einer Turmhöhe von beispielsweise H = 30 m ist die Hochdruck-Leitung 14 wegen der der Steigleitung vor- und nachgeordneten Anschlussleitungen mindestens auch 30 m lang. Bei einem Durchmesser DN50 der Hochdruck-Leitung 14 ergibt sich bei einem Volumenstrom von beispielsweise 5.000 Liter/Stunde für ein erstes Verweilen V1 des Konzentrats K mit der Zulauf-Temperatur T2 auf dem Hochdruck-Niveau p2 und mit der Trockenstoff-Konzentration c eine mittlere erste Verweilzeit t1 von 42 Sekunden. Die Probleme, die mit dem beschriebenen Verfahren nach dem Stand der Technik einhergehen, wurden vorstehend thematisiert.

### Erfindung

### Verfahren und Trocknungsanlage (Figuren 1a, 3 und 4)

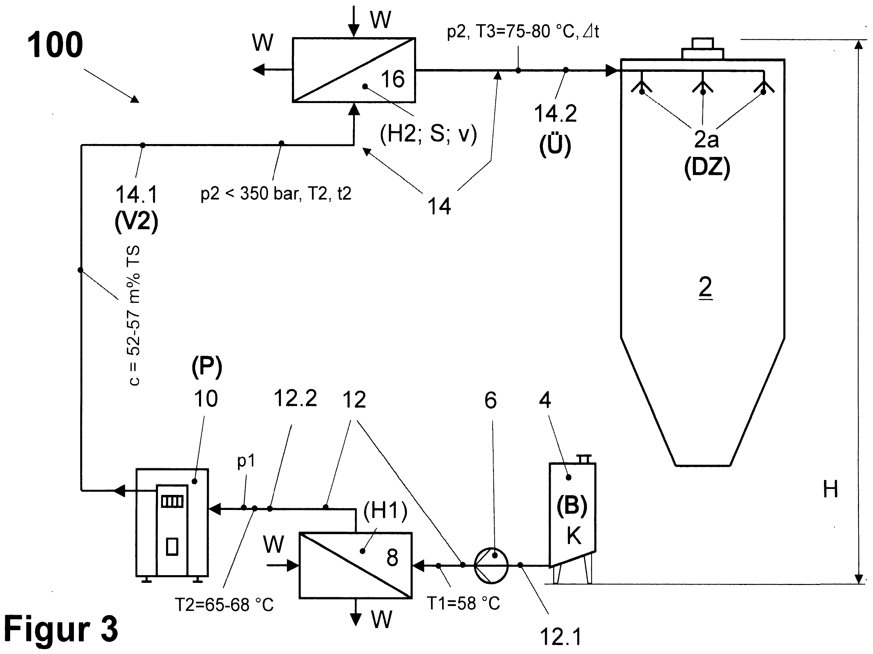

Ein erfindungsgemäßes Verfahren zum Erhitzen eines Konzentrats K in einer Anlage zum Zerstäubungstrocknen 100 zeigt **Figur 1a** und eine erfindungsgemäße Anlage 100 zur Durchführung dieses Verfahrens zeigt **Figur 3****.** Nachfolgend werden das Verfahren und die zugeordnete Anlage anhand dieser beiden Figuren parallel abgehandelt. Die genannten Temperaturen, Drücke und die Trockenstoff-Konzentration sind beispielhaft gewählt und können in der Praxis nach oben oder unten abweichen.

Das erfindungsgemäße Verfahren entwickelt, wie ein Vergleich der **Figur 1** mit **Figur 1a** und der **Figur 2** mit **Figur** 3 zeigt, das vorstehend beschriebene Verfahren nach dem Stand der Technik und die bekannte Anlage 1 zu seiner Durchführung weiter. Soweit eine Übereinstimmung gegeben ist, wurden gleiche Bezeichnungen verwendet. Es wird daher, um Wiederholungen zu vermeiden, diesbezüglich auf die vorstehende Beschreibung zu den **Figuren 1** und **2** verwiesen.

**Figur 1a** zeigt augenfällig, durch breitere Linienführung hervorgehoben, die Unterschiede zwischen dem Verfahren nach dem Stand der Technik **(****Figur 1**) und dem erfindungsgemäßen Verfahren auf, und **Figur 3** zeigt anhand der Trocknungsanlage 100 auf, wie diese Unterschiede vorrichtungstechnisch realisiert werden.

Die Hochdruck-Leitung 14 (**Figur 3****)** ist über die Primärseite eines zusätzlichen Hochdruck-Wärmeaustauschers 16 geführt, wobei ein erster Hochdruck-Leitungsabschnitt 14.1 der Hochdruck-Leitung 14 den Ausgang der Hochdruck-Kolbenpumpe 10 mit dem Eingang des zusätzlichen Hochdruck-Wärmeaustauschers 16 und ein zweiter Hochdruck-Leitungsabschnitt 14.2 der Hochdruck-Leitung 14 den Ausgang des zusätzlichen Hochdruck-Wärmeaustauschers 16 mit den Druckzerstäuber-Düsen 2a verbindet. Der zusätzliche Hochdruck-Wärmeaustauscher 16 wird sekundärseitig mit einem Wärmeträgermittel W, vorzugsweise Heißwasser, beaufschlagt. Die in **Figur 3** beispielhaft gewählten Werte für das Niederdruck-Niveau p1, das Hochdruck-Niveau p2, die Vorlauf-Temperatur T1, die Zulauf-Temperatur T2 bis zu dem zusätzlichen Hochdruck-Erhitzer 16 und die Trockenstoff-Konzentration c entsprechen weitestgehend jenen Werten, die bei Verfahren nach dem Stand der Technik und der Anlage 1 zu seiner Durchführung genannt wurden (siehe **Figuren 1****,** **2**).

In dem zusätzlichen Hochdruck-Wärmeaustauscher 16 erfolgt ein zusätzliches Hochdruck-Erhitzen H2 des Konzentrats K auf dem Hochdruck-Niveau p2 auf eine erhöhte Zerstäubungs-Temperatur T3, die im Bereich von 75 bis 80 °C liegen kann (**Figur 3**). Weiterhin ist ein definiertes Scherbeanspruchen S des Konzentrats K im Verlauf oder im unmittelbaren Nachgang zum zusätzlichen Hochdruck-Erhitzen H2 bei einer erhöhten Strömungsgeschwindigkeit v vorgesehen **(****Figuren 3****,** **1a****).** Hierzu weist der zusätzliche Hochdruck-Wärmeaustauscher 16 ausgangsseitig Mittel zur definierten Scherbeanspruchung des geförderten Konzentrats K auf.

Da der zusätzliche Hochdruck-Wärmeaustauscher 16 auf der Turmhöhe H angeordnet ist (**Figur 3**), ergibt sich nunmehr in der Steigleitung zwischen letzterem und dem Ausgang der Hochdruck-Kolbenpumpe 10, d.h. in dem ersten Hochdruck-Leitungsabschnitt 14.1, ein zweites Verweilen V2 des Konzentrats K mit der Zulauf-Temperatur T2 auf dem Hochdruck-Niveau p2 und mit der Trockenstoff-Konzentration c mit einer mittleren zweiten Verweilzeit t2, die kleiner als die erste Verweilzeit t1 und bei sonst annähernd gleichen Prozessdaten damit unkritischer als diese ist.

Anschließend wird ein unverzügliches Überführen Ü des durch definiertes Scherbeanspruchen S behandelten Konzentrats K an den Ort seines Druckzerstäubens DZ durchgeführt **(****Figur 1a**), wobei eine Überführungszeit Δt für das unverzügliche Überführen Ü durch einen minimal möglichen strömungstechnisch wirksamen Abstand zwischen den Mitteln zur Durchführung des definierten Scherbeanspruchens S und dem Ort des Druckzerstäubens DZ bestimmt ist. Das unverzügliche Überführen Ü findet in dem entsprechend bemessenen zweiten Hochdruck-Leitungsabschnitt 14.2 statt, der auf ein konstruktiv mögliches Mindestmaß reduziert ist (**Figur 3**).

Ein entscheidender Vorteil ergibt sich im Vergleich zum Verfahren nach dem Stand der Technik unter anderem dadurch, dass beim erfindungsgemäßen Verfahren durch das zusätzliche Hochdruck-Erhitzen H2 das Konzentrat K den Druckzerstäuber-Düsen 2a mit einer höheren Zerstäubungs-Temperatur, nämlich der erhöhten Zerstäubungs-Temperatur T3 = 75-80 °C, zugeführt wird, wodurch eine Steigerung der Mengenleistung des Trocknerturms 2 ohne Qualitätseinbußen erreicht wird.

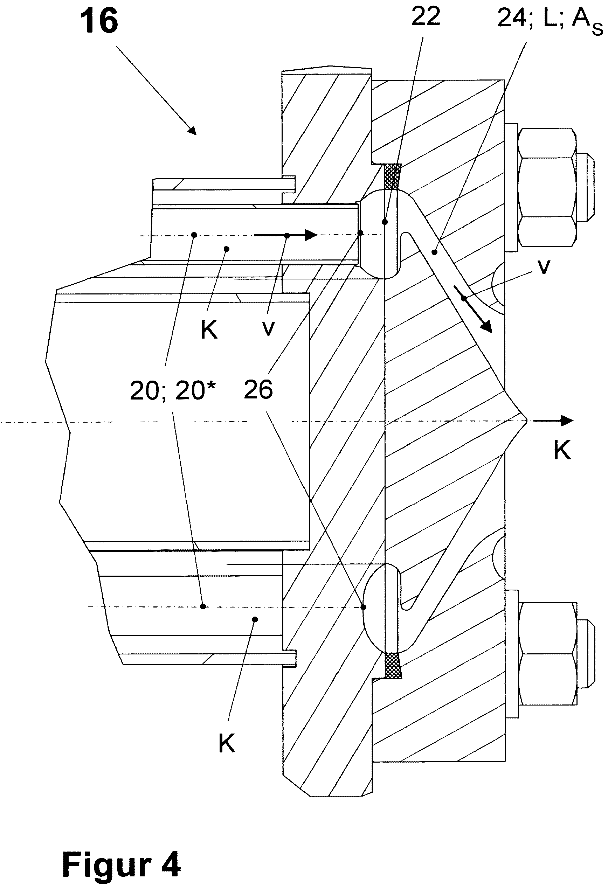

Der zusätzliche Hochdruck-Wärmeaustauscher 16 ist als Rohrbündel-Wärmeaustauscher mit einer Vielzahl von vom Konzentrat K parallel durchströmten Innenrohren 20 ausgebildet (**Figur 4**). Die Innenrohre 20 sind kreisringförmig und auf einem einzigen Kreis 26 angeordnet und bilden in Summe einen Innenkanal 20* aus, der, in Strömungsrichtung gesehen, im Anschluss an die Innenrohre (20) in Form eines umlaufenden Ringraumes (22) ausgeführt ist. Die Mittel zur definierten Scherbeanspruchung des geförderten Konzentrats K sind ausgangsseitig am Rohrbündel-Wärmeaustauscher 16 angeordnet und bestehen in einem ringraumförmigen austrittsseitigen Kanal 24, der einerseits mit dem Ausgang des umlaufenden Ringraumes 22 und andererseits mit dem zweiten Hochdruck-Leitungsabschnitt 14.2 verbunden ist. Der ringraumförmige austrittsseitige Kanal 24 weist eine definierte Erstreckungslänge L und einen definierten längenabhängigen Verlauf seiner Kanaldurchtrittsquerschnitte A_{S} auf und wird, ebenso wie die Innenrohre 20 von dem Konzentrat K mit einer erhöhten Strömungsgeschwindigkeit v durchströmt.

### BEZUGSZEICHENLISTE DER VERWENDETEN ABKÜRZUNGEN

### Figur 1, 2 (Stand der Technik))

- 1: Trocknungsanlage (Anlage zum Zerstäubungstrocknen)

- 2: Trocknerturm
- 2a: Druckzerstäuber-Düse

- 4: Vorlaufbehälter
- 6: Vorlaufpumpe
- 8: Niederdruck-Wärmeaustauscher
- 10: Hochdruck-Kolbenpumpe (Homogenisator)

- 12: Niederdruck-Leitung
- 12.1: erster Leitungsabschnitt
- 12.2: zweiter Leitungsabschnitt

- 14: Hochdruck-Leitung

- H: Turmhöhe
- c: Trockenstoff-Konzentration (in Massenprozent (m%) Trockenstoff (TS))
- t1: erste Verweilzeit

### Temperaturen

- T1: Vorlauf-Temperatur (ca. 58 °C)
- T2: Zulauf-Temperatur (ca. 65-68 °C)

### Drücke

- p1: Niederdruck-Niveau
- p2: Hochdruck-Niveau (< 350 bar)

### Stoffe

- K: Konzentrat (Produkt)
- TS: Trockenstoff
- W: Wärmeträgermedium

### Verfahrensschritte

- B: Bevorraten
- DZ: Druckzerstäuben
- H1: Niederdruck-Erhitzen
- P: Druckerhöhen
- V1: erstes Verweilen

### Figuren 1a, 3,4 (Erfindung)

- 100: Trocknungsanlage (Anlage zum Zerstäubungstrocknen)

- 14.1: erster Hochdruck-Leitungsabschnitt
- 14.2: zweiter Hochdruck-Leitungsabschnitt

- 16: zusätzlicher Hochdruck-Wärmeaustauscher (Rohrbündel-Wärmeaustauscher)
- 20: Innenrohr
- 20*: Innenkanal
- 22: umlaufender Ringraum
- 24: ringraumförmiger austrittsseitiger Kanal
- 26: Kreis

- A_{S}: Kanaldurchtrittsquerschnitt
- L: Erstreckungslänge

- t2: zweite Verweilzeit
- Δt: Überführungszeit
- v: erhöhte Strömungsgeschwindigkeit (bei H2)

### Temperatur

- T3: erhöhte Zerstäubungs-Temperatur (75-80°C)

### Verfahrensschritt

- H2: zusätzliches Hochdruck-Erhitzen
- S: Scherbeanspruchen
- Ü: unverzügliches Überführen
- V2: zweites Verweilen

## Patentansprüche

1. Verfahren zum Erhitzen eines Konzentrats (K) in einer Anlage zum Zerstäubungstrocknen (100),
• bei dem auf einem Niederdruck-Niveau (p1) ein Niederdruck-Erhitzen (H1) des Konzentrats (K) von einer Vorlauf-Temperatur (T1) auf eine für ein Druckzerstäuben (DZ) des Konzentrats (K) erforderliche Zerstäubungs-Temperatur (T2) durchgeführt wird und
• bei dem anschließend ein Druckerhöhen (P) des Konzentrats (K) auf ein Hochdruck-Niveau (p2) erfolgt, das bis an maximal 350 bar heranreichen kann,
**gekennzeichnet durch** die Abfolge der folgenden Schritte (a) bis (c):
(a) zusätzliches Hochdruck-Erhitzen (H2) des Konzentrats (K) auf dem Hochdruck-Niveau (p2) auf eine erhöhte Zerstäubungs-Temperatur (T3), die im Bereich von 75 bis 80 °C liegt, mittels eines zusätzlichen Hochdruck-Wärmeaustauschers (16), der sekundärseitig mit einem Wärmeträgermittel (W) beaufschlagt und der als Rohrbündel-Wärmeaustauscher mit einer Vielzahl von vom Konzentrat (K) parallel durchströmten Innenrohren ausgebildet ist, die kreisringförmig und auf einem einzigen Kreis angeordnet sind und in Summe einen Innenkanal ausbilden, der, in Strömungsrichtung gesehen, im Anschluss an die Innenrohre in Form eines umlaufenden Ringraumes ausgeführt ist,
(b) definiertes Scherbeanspruchen (S) des Konzentrats (K) im Verlauf oder im unmittelbaren Nachgang zur Behandlung nach Schritt (a) mit Mitteln, die in einem ringraumförmigen Kanal bestehen, der einerseits mit dem Ausgang des umlaufenden Ringraumes und andererseits mit einem zweiten Hochdruck-Leitungsabschnitt verbunden ist und der eine definierte Erstreckungslänge und einen definierten längenabhängigen Verlauf seiner Kanaldurchtrittsquerschnitte aufweist und
(c) anschließend unverzügliches Überführen (Ü) des nach Schritt (b) behandelten Konzentrats (K) an den Ort seines Druckzerstäubens (DZ), wobei eine Überführungszeit (Δt) für das unverzügliche Überführen (Ü) durch einen minimal möglichen strömungstechnisch wirksamen Abstand zwischen den Mitteln zur Durchführung des Schrittes (b) und dem Ort des Druckzerstäubens (DZ) bestimmt ist.

2. Verfahren nach Anspruch 1,
**dadurch gekennzeichnet,**
**dass** eine erhöhte Strömungsgeschwindigkeit (v) des Konzentrats (K) beim zusätzlichen Hochdruck-Erhitzen (H2) gegenüber dessen Strömungsgeschwindigkeit im dem zusätzlichen Hochdruck-Erhitzen (H2) vorgelagerten Behandlungsbereich um 20 bis 25 % erhöht ist.

3. Verfahren nach Anspruch 2,
**dadurch gekennzeichnet,**
**dass** die erhöhte Strömungsgeschwindigkeit (v) beim zusätzlichen Hochdruck-Erhitzen (H2) bis maximal 3 m/s beträgt.

4. Verfahren nach einem der vorhergehenden Ansprüche,
**dadurch gekennzeichnet,**
**dass** das Hochdruck-Niveau (p2) bis maximal 350 bar beträgt.

5. Verfahren nach einem der vorhergehenden Ansprüche,
**dadurch gekennzeichnet,**
**dass** die erhöhte Zerstäubungs-Temperatur (T3) auf 80 °C eingestellt wird.

6. Verfahren nach einem der vorhergehenden Ansprüche,
**dadurch gekennzeichnet,**
**dass** ein Konzentrat (K) mit einer Trockenstoff-Konzentration (c) bis maximal 65 Mengenprozent (65 m%) behandelt wird.

7. Verfahren zur Steuerung des Erhitzens eines Konzentrats in einer Anlage zum Zerstäubungstrocknen (100), wobei das Konzentrat (K) durch zusätzliches Hochdruck-Erhitzen (H2) nach Anspruch 1 behandelt wird,
• wobei die Steuerungsparameter für das zusätzliche Hochdruck-Erhitzen (H2) durch die Eigenschaften des zu erhitzenden Konzentrats (K) und die physikalischen Randbedingungen bestimmt sind,
• wobei unter den Eigenschaften des zu erhitzenden Konzentrats (K) dessen Volumenstrom, Viskosität, Druck, Temperatur und Trockenstoff-Konzentration und unter den physikalischen Randbedingungen Druck und Temperatur am Ort des Druckzerstäubens (DZ) verstanden wird,
• wobei die Steuerungsparameter, jeweils bezogen auf das Konzentrat (K), das Hochdruck-Niveau (p2), die erhöhte Zerstäubungs-Temperatur (T3), eine erhöhte Strömungsgeschwindigkeit (v) beim zusätzlichen Hochdruck-Erhitzen (H2) und eine Intensität des Scherbeanspruchens (S) sind, und
• wobei die Steuerungsparameter mittels einer vor oder bei Inbetriebnahme der Anlage zum Sprühtrocknen erstellten oder hinterlegten Kalibrierfunktion eingestellt werden.

8. Anlage (100), welche zur Durchführung des Verfahrens nach Anspruch 1 geeignet ist, bestehend aus
• einem Trocknerturm (2) mit Druckzerstäuber-Düsen (2a),
• einem Vorlaufbehälter (4), der über einen ersten Leitungsabschnitt (12.1) einer Niederdruck-Leitung (12), in dem eine Vorlaufpumpe (6) angeordnet ist, fluidgängig mit dem Eintritt eines Niederdruck-Wärmeaustauschers (8) verbunden ist, und
• einer Hochdruck-Kolbenpumpe (10), die eingangsseitig über einen zweiten Leitungsabschnitt (12.2) der Niederdruck-Leitung (12) mit dem Ausgang des Niederdruck-Wärmeaustauschers (8) und die ausgangsseitig über eine Hochdruck-Leitung (14) mit den Druckzerstäuber-Düsen (2a) verbunden ist,
**dadurch gekennzeichnet,**
• **dass** die Hochdruck-Leitung (14) über einen zusätzlichen Hochdruck-Wärmeaustauscher (16) geführt ist, der als Rohrbündel-Wärmeaustauscher mit einer Vielzahl von vom Konzentrat (K) parallel durchströmten Innenrohren (20) ausgebildet ist, die kreisringförmig und auf einem einzigen Kreis (26) angeordnet sind und in Summe einen Innenkanal (20*) ausbilden, der, in Strömungsrichtung gesehen, im Anschluss an die Innenrohre (20) in Form eines umlaufenden Ringraumes (22) ausgeführt ist,
• **dass** ein erster Hochdruck-Leitungsabschnitt (14.1) der Hochdruck-Leitung (14) den Ausgang der Hochdruck-Kolbenpumpe (10) mit dem Eingang des zusätzlichen Hochdruck-Wärmeaustauschers (16) und ein zweiter Hochdruck-Leitungsabschnitt (14.2) der Hochdruck-Leitung (14) den Ausgang des zusätzlichen Hochdruck-Wärmeaustauschers (16) mit den Druckzerstäuber-Düsen (2a) verbindet,
• **dass** eine strömungstechnisch wirksame Länge des zweiten Hochdruck-Leitungsabschnitts (14.2) auf ein konstruktiv mögliches Mindestmaß reduziert ist, und
• **dass** der zusätzliche Hochdruck-Wärmeaustauscher (16) ausgangsseitig Mittel zur definierten Scherbeanspruchung des geförderten Konzentrats (K) aufweist, die in einem ringraumförmigen austrittsseitigen Kanal (24) bestehen, der einerseits mit dem Ausgang des umlaufenden Ringraumes (22) und andererseits mit dem zweiten Hochdruck-Leitungsabschnitt (14.2) verbunden ist, wobei der ringraumförmige austrittsseitige Kanal (24) eine definierte Erstreckungslänge (L) und einen definierten längenabhängigen Verlauf seiner Kanaldurchtrittsquerschnitte (A_{S}) aufweist.

9. Anlage nach Anspruch 8,
**dadurch gekennzeichnet,**
**dass** die Kanaldurchtrittsquerschnitte (A_{S}) über die gesamte Erstreckungslänge (L) konstant sind.

10. Anlage nach Anspruch 9,
**dadurch gekennzeichnet,**
**dass** der Kanaldurchtrittsquerschnitt (A_{S}) dem Gesamtdurchtrittsquerschnitt aller parallel durchströmten Innenrohre (20) entspricht.

## Claims

1. A method for heating a concentrate (K) in an installation for spray drying (100),
• in which, at a low pressure level (p1), a low-pressure heating (H1) of the concentrate (K) from a flow temperature (T1) to a spraying temperature (T2) required for a pressurized spraying (DZ) of the concentrate (K), is performed and
• in which a pressure increasing (P) of the concentrate (K) to a high pressure level (p2) subsequently takes place, which can reach up to a maximum of 350 bar,
**characterized by** the sequence of the following steps (a) to (c):
(a) additional high-pressure heating (H2) of the concentrate (K) at the high pressure level (p2) to an elevated spraying temperature (T3), which lies in the range of 75 to 80 °C, by means of an additional high-pressure heat exchanger (16), which is supplied on the secondary side with a heat-transfer medium (W) and which is designed as a shell-and-tube heat exchanger having a plurality of inner tubes, through which the concentrate (K) flows in parallel and which are arranged in the shape of a circular ring and on a single circle and which together form an inner channel, which is designed to adjoin the inner tubes (20) in the shape of a circumferential annular space in the flow direction,
(b) defined shear loading (S) of the concentrate (K) in the course of or immediately after the treatment according to step (a) with means that exist in a channel having the shape of an annular space, which is connected on one side with the outlet of the circumferential annular space and on the other side with a second high-pressure line section and which has a defined extension length and a defined length-dependent progression of its channel passage cross-sections, and
(c) subsequent immediate transferring (U) of the concentrate (K) treated according to step (b) to the location of its pressurized spraying (DZ), wherein a transfer time (Δt) for the immediate transfer (Ü) is determined by a minimum possible fluidic effective distance between the means for performing the step (b) and the location of the pressurized spraying (DZ).

2. The method according to claim 1,
**characterized in that**
an elevated flow speed (v) of the concentrate (K) during the additional high-pressure heating (H2) is increased by 20 to 25% in the treatment area located upstream from the additional high-pressure heating (H2) with respect to its flow speed.

3. The method according to claim 2,
**characterized in that**
the elevated flow speed (v) during the additional high-pressure heating (H2) is up to max. 3 m/s.

4. The method according to one of the previous claims,
**characterized in that**
the high pressure level (p2) is up to max. 350 bar.

5. The method according to one of the previous claims,
**characterized in that**
the elevated spraying temperature (T3) is set to 80 °C.

6. The method according to one of the previous claims,
**characterized in that**
a concentrate (K) is treated with a dry material concentration (c) of up to max. 65% mass percent (65 m%).

7. A method for controlling the heating of a concentrate in an installation for spray drying (100), wherein the concentrate (K) is treated by additional high-pressure heating (H2) according to claim 1,
• wherein the control parameters for the additional high-pressure heating (H2) are determined by the properties of the concentrate (K) to be heated and the physical boundary conditions,
• wherein the properties of the concentrate (K) to be heated are its volumetric flow, viscosity, pressure, temperature and dry material concentration and the physical boundary conditions are the pressure and temperature at the location of the pressurized spraying (DZ),
• wherein the control parameters, respectively relating to the concentrate (K), are the high pressure level (p2), the elevated spray temperature (T3), the elevated flow speed (v) during the additional high-pressure heating (H2) and the intensity of the shear loading (S), and
• wherein the control parameters are set by means of a calibration function saved or generated before or during startup of the installation for spray drying.

8. An installation (100) for performing the method according to claim 1, consisting of
• a drying tower (2) with pressurized spray nozzles (2a),
• a feed tank (4), which is connected in a fluid-accessible manner with the inlet of a low-pressure heat exchanger (8) via a first line section (12.1) of a low-pressure line (12), in which a feed pump (6) is arranged, and
• a high-pressure piston pump (10), which is connected on the inlet side with the outlet of the low-pressure heat exchanger (8) via a second line section (12.2) of the low-pressure line (12) and which is connected on the outlet side with the pressurized spray nozzles (2a) via a high-pressure line (14),
**characterized in that**
• the high-pressure line (14) is guided via an additional high-pressure heat exchanger (16), which is designed as a shell-and-tube heat exchanger having a plurality of inner tubes (20), through which the concentrate (K) flows in parallel and which are arranged in the shape of a circular ring and on a single circle (26) and which together form an inner channel (20*), which adjoins the inner tubes (20) in the shape of a circumferential annular space (22) in the flow direction,
• a first high-pressure line section (14.1) of the high-pressure line (14) connects the outlet of the high-pressure piston pump (10) with the inlet of the additional high-pressure heat exchanger (16), and a second high-pressure line section (14.2) of the high-pressure line (14) connects the outlet of the additional high-pressure heat exchanger (16) with the pressurized spray nozzles (2a),
• a fluidic effective length of the second high-pressure line section (14.2) is reduced to a structurally feasible minimum size, and
• the additional high-pressure heat exchanger (16) has means on the outlet side for the defined shear loading of the conveyed concentrate (K), which exist in an outlet-side channel having an annular-shaped space (24), which is connected on one side with the outlet of the circumferential annular space (22) and on the other side with the second high-pressure line section (14.2), wherein the annular-space-shaped, outlet-side channel (24) has a defined extension length (L) and a defined length-dependent progression of its channel passage cross-sections (As).

9. The installation according to claim 8,
**characterized in that**
the channel passage cross-sections (A_{S}) are constant over the entire extension length (L).

10. The installation according to claim 9,
**characterized in that**
the channel passage cross-section (As) corresponds with the total passage cross-section of all inner tubes (20) that are flowed through in parallel.

## Revendications

1. Procédé de chauffage d'un concentré (K) dans un système de séchage par atomisation (100),
- dans lequel un chauffage basse pression (H1) du concentré (K), d'une température de départ (T1) à une température d'atomisation (T2), nécessaire pour une atomisation sous pression (DZ) du concentré (K), est effectué à un niveau basse pression (p1), et
- dans lequel la pression (P) du concentré (K) est ensuite augmentée à un niveau haute pression (p2), lequel peut atteindre au maximum jusqu'à 350 bar,
**caractérisé par** la séquence des étapes suivantes (a) à (c) :
(a) chauffage haute pression supplémentaire (H2) du concentré (K) au niveau haute pression (p2), à une température d'atomisation supérieure (T3) comprise entre 75 et 80°C, à l'aide d'un échangeur de chaleur haute pression supplémentaire (16), lequel est soumis à un fluide caloporteur (W) côté secondaire et conçu comme un échangeur de chaleur à faisceau de tubes avec une multitude de tubes intérieurs traversés parallèlement par le concentré (K), lesquels sont agencés de façon annulaire circulaire et sur un seul cercle et forment conjointement un canal intérieur réalisé sous la forme d'un espace annulaire circonférentiel à la suite des tubes intérieurs, vu dans la direction d'écoulement,
(b) cisaillement défini (S) du concentré (K) pendant ou directement après le traitement conformément à l'étape (a), à l'aide de moyens consistant en un canal en forme d'espace annulaire, lequel est relié d'une part à la sortie de l'espace annulaire circonférentiel et d'autre part à une deuxième section de conduite haute pression, et lequel présente une longueur d'extension définie et un tracé défini de ses sections transversales de passage de canal, en fonction de la longueur, puis
(c) transfert immédiat (Ü) du concentré (K) traité conformément à l'étape (b) vers son lieu d'atomisation sous pression (DZ), sachant qu'un temps de transfert (Δt) pour le transfert immédiat (Ü) est déterminé par une distance minimale efficace selon la technique de flux entre les moyens d'exécution de l'étape (b) et par le lieu de l'atomisation sous pression (DZ).

2. Procédé selon la revendication 1,
**caractérisé en ce que**
une vitesse d'écoulement supérieure (v) du concentré (K) pendant le chauffage haute pression supplémentaire (H2) est plus élevée de 20 à 25% par rapport à la vitesse d'écoulement de celui-ci dans la zone de traitement en amont du chauffage haute pression supplémentaire (H2).

3. Procédé selon la revendication 2,
**caractérisé en ce que**
la vitesse d'écoulement supérieure (v) pendant le chauffage haute pression supplémentaire (H2) s'élève au maximum à 3 m/s.

4. Procédé selon l'une des revendications précédentes,
**caractérisé en ce que**
le niveau haute pression (p2) s'élève au maximum à 350 bar.

5. Procédé selon l'une des revendications précédentes,
**caractérisé en ce que**
la température d'atomisation supérieure (T3) est réglée sur 80°C.

6. Procédé selon l'une des revendications précédentes,
**caractérisé en ce que**
un concentré (K) est traité avec une concentration en matières sèches (c) maximale de 65 pourcent en nombre (65%n).

7. Procédé de commande du chauffage d'un concentré dans un système de séchage par atomisation (100), dans lequel le concentré (K) est traité par un chauffage haute pression supplémentaire (H2) conformément à la revendication 1,
- dans lequel les paramètres de commande pour le chauffage haute pression supplémentaire (H2) sont déterminés par les propriétés du concentré (K) à chauffer et par des conditions marginales physiques,
- dans lequel les propriétés considérées du concentré (K) chauffé sont le flux volumique, la viscosité, la pression, la température et la concentration en matières sèches et les conditions marginales physiques considérées sont la pression et la température sur le lieu d'atomisation sous pression (DZ),
- dans lequel les paramètres de commande, respectivement rapportés au concentré (K), sont le niveau haute pression (p2), la température d'atomisation supérieure (T3), une vitesse d'écoulement supérieure (v) pendant le chauffage haute pression supplémentaire (H2) et une intensité du cisaillement (S), et
- dans lequel les paramètres de commande sont réglés à l'aide d'une fonction d'étalonnage établie ou enregistrée avant ou pendant le démarrage du système de séchage par atomisation.

8. Système (100) approprié pour l'exécution du procédé selon la revendication 1, comprenant
- une tour de séchage (2) avec des buses d'atomiseur à pression (2a),
- une cuve d'alimentation (4) fluidiquement reliée à l'entrée d'un échangeur de chaleur basse pression (8) par le biais d'une première section de conduite (12.1) d'une conduite basse pression (12) dans laquelle est agencée une pompe d'alimentation (6), et
- une pompe à piston haute pression (10) reliée côté entrée à la sortie de l'échangeur de chaleur basse pression (8) par le biais d'une deuxième section de conduite (12.2) de la conduite basse pression (12) et côté sortie aux buses d'atomiseur à pression (2a) par le biais d'une conduite haute pression (14),
**caractérisé en ce que**
- la conduite haute pression (14) est passe par un échangeur de chaleur haute pression supplémentaire (16) conçu comme un échangeur de chaleur à faisceau de tubes avec une multitude de tubes intérieurs (20) traversés parallèlement par le concentré (K), lesquels sont agencés de façon annulaire circulaire et sur un seul cercle (26) et forment conjointement un canal intérieur (20*) réalisé sous la forme d'un espace annulaire circonférentiel (22) à la suite des tubes intérieurs (20), vu dans la direction d'écoulement,
- **en ce qu'**une première section de conduite haute pression (14.1) de la conduite haute pression (14) relie la sortie de la pompe à piston haute pression (10) à l'entrée de l'échangeur de chaleur haute pression supplémentaire (16) et une deuxième section de conduite haute pression (14.2) de la conduite haute pression (14) relie la sortie de l'échangeur de chaleur haute pression supplémentaire (16) aux buses d'atomiseur à pression (2a),
- **en ce qu'**une longueur efficace selon la technique de flux de la deuxième section de conduite haute pression (14.2) est réduite à une dimension minimale du point de vue de la construction, et
- **en ce que** l'échangeur de chaleur haute pression supplémentaire (16) présente côté sortie des moyens pour le cisaillement défini du concentré (K) transporté, lesquels consistent en un canal en forme d'espace annulaire côté sortie (24) relié d'une part à la sortie de l'espace annulaire circonférentiel (22) et d'autre part à une deuxième section de conduite haute pression (14.2), le canal en forme d'espace annulaire côté sortie (24) présentant une longueur d'extension définie (L) et un tracé défini de ses sections transversales de passage de canal (As), en fonction de la longueur.

9. Système selon la revendication 8,
**caractérisé en ce que**
les sections transversales de passage de canal (As) sont constantes sur toute la longueur d'extension (L).

10. Système selon la revendication 9,
**caractérisé en ce que**
la section transversale de passage de canal (As) correspond à la section transversale de passage totale de tous les tubes intérieurs (20) traversés parallèlement.
